# EUROPEAN PATENT APPLICATION

(11) **EP 2 487 554 A1**
(43) Date of publication of application: **15.08.2012**
(21) Application number: 11188999.4
(22) Date of filing: 14.11.2011
(51) Int. Cl.: G06F 1/16, H04M 1/04

(54) **Portable data processing system and signal input/output device thereof**

(30) Priority: 14.02.2011 US 27229
(71) Applicant: Teco Image System Co., Ltd., Taipei 330 (TW)
(72) Inventor: Ko, Ikujin, 330 Taipei (TW)
(74) Representative: 2K Patentanwälte Blasberg Kewitz & Reichel

(57) **Abstract**

A portable data processing system includes a handheld communication device and a signal input/output device. The signal input/output device includes a casing, communication module, an input module, an output module and a bridging unit. The input module is used for generating and outputting a control command. When the handheld communication device is accommodated within the receiving space and connected with the communication module, the handheld communication device is operated according to the control command. The output module is used for outputting a data signal generated by the handheld communication device in real time.

## Description

### FIELD OF THE INVENTION

The present invention relates to a portable data processing system, and more particularly to a portable data processing system by using a handheld communication device to perform data processing and computing operations. The present invention also relates to a signal input/output device of the portable data processing system.

### BACKGROUND OF THE INVENTION

With increasing development of science and technology, a variety of consumer electronic products (e.g. smart phones, tablet personal computers and notebook computers) are designed to have novel functions. For example, the trends of designing the smart phones are toward small size, light weightiness, integrated functions, high data processing and computing speed and easy portability. In addition to the basic functions of typical telephones, the smart phones have many expansive functions such as document reading and editing functions, video playback functions, Bluetooth communication functions, digital camera functions, file access functions, satellite navigation functions, wireless internet access functions, and the like. Nowadays, the advanced processing and computing ability of the smart phone can meet the requirements of most businessmen in different occasions.

Since the smart phone is restricted to small size and light weightiness, the display screen of the smart phone is small and the touch area of the display device thereof is also small. The small-sized display screen and the small-sized touch area become hindrance from reading or editing documents, reading or editing electronic mails, browsing multimedia files or accessing the internet for a long time. Consequently, the users prefer using other data processing systems (e.g. desktop computers) to perform such tasks. Moreover, if a smart phone, a notebook computer, a tablet personal computer and a projector are simultaneously purchased and carried, some drawbacks occur. For example, the cost is high, and the baggage is weighty. In addition, it is difficult and impractical to carry many electronic products.

Moreover, since the operating systems and application programs for different electronic products are different, the operating systems and application programs corresponding to the carried electronic products should be purchased. The cost of purchasing many software components is too high. In addition, if the user wants to transfer or copy the data (e.g. multimedia files, text files or application programs) of an electronic product to another electronic product, the data accessing operations should be frequently performed. Under this circumstance, a data loss problem occurs, the system is incompatible, or even the electronic product crashes or has a breakdown.

Therefore, there is a need of providing a portable data processing system by using a handheld communication device to perform data processing and computing operations, and a signal input/output device of the portable data processing system.

### SUMMARY OF THE INVENTION

The present invention provides a portable data processing system by using a handheld communication device to perform data processing and computing operations, so that the portable data processing system has many benefits such as user-friendliness, easy portability, cost-effectiveness and practicability.

The present invention also provides a portable data processing system by using a handheld communication device to perform data processing and computing operations, so that the image signal of the handheld communication device can be synchronously outputted from a larger screen and the control command of handheld communication device can be inputted in a user-friendly manner.

The present invention further provides a signal input/output device of the portable data processing system.

In accordance with an aspect of the present invention, there is provided a portable data processing system. The portable data processing system includes a handheld communication device and a signal input/output device. The signal input/output device includes a casing, communication module, an input module, an output module and a bridging unit. The casing has a specified outward profile. The casing has a receiving space for partially or completely accommodating the handheld communication device. The communication module is disposed within the receiving space, and selectively connected with the handheld communication device. The input module is used for generating and outputting a control command. When the handheld communication device is accommodated within the receiving space and connected with the communication module, the handheld communication device is operated according to the control command. The output module is used for outputting a data signal generated by the handheld communication device in real time. The bridging unit is connected with the communication module, the input module and the output module for communicating the communication module, the input module and the output module with each other, thereby transmitting the control command and the data signal.

In accordance with another aspect of the present invention, there is provided a portable data processing system. The portable data processing system includes a handheld communication device and a signal input/output device. The signal input/output device includes a communication module, an input module, an output module and a bridging unit. The communication module is selectively connected with the handheld communication device. The input module is configured for generating and outputting a control command. When the handheld communication device is connected with the communication module, the handheld communication device is operated according to the control command. The output module is configured for outputting a data signal generated by the handheld communication device in real time. The bridging unit is connected with the communication module, the input module and the output module for communicating the communication module, the input module and the output module with each other, thereby transmitting the control command and the data signal.

In accordance with another aspect of the present invention, there is provided a signal input/output device communicable with a handheld communication device to collectively define a portable data processing system. The signal input/output device includes a casing, a communication module, an input module, an output module and a bridging unit. The casing has a specified outward profile, wherein the casing has a receiving space for partially or completely accommodating the handheld communication device. The communication module is disposed within the receiving space, and selectively connected with the handheld communication device. The input module is configured for generating and outputting a control command. When the handheld communication device is accommodated within the receiving space and connected with the communication module, the handheld communication device is operated according to the control command. The output module is used for outputting a data signal generated by the handheld communication device in real time. The bridging unit is connected with the communication module, the input module and the output module for communicating the communication module, the input module and the output module with each other, thereby transmitting the control command and the data signal.

The above contents of the present invention will become more readily apparent to those ordinarily skilled in the art after reviewing the following detailed description and accompanying drawings, in which:

### BRIEF DESCRIPTION OF THE DRAWINGS

FIG. 1 is a schematic block diagram illustrating the architecture of a portable data processing system according to a first embodiment of the present invention;

FIG. 2 is a flowchart illustrates a method of using the portable data processing system according to the first embodiment of the present invention;

FIGS. 3A and 3B are schematic perspective views illustrating a first application example of the portable data processing system of FIG. 1;

FIGS. 4A and 4B are schematic perspective views illustrating a second application example of the portable data processing system of FIG. 1;

FIG. 5 is a schematic block diagram illustrating the architecture of a portable data processing system according to a second embodiment of the present invention;

FIGS. 6A and 6B are schematic perspective views illustrating a first application example of the portable data processing system of FIG. 5; and

FIGS. 7A and 7B are schematic perspective views illustrating a second application example of the portable data processing system of FIG. 5.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

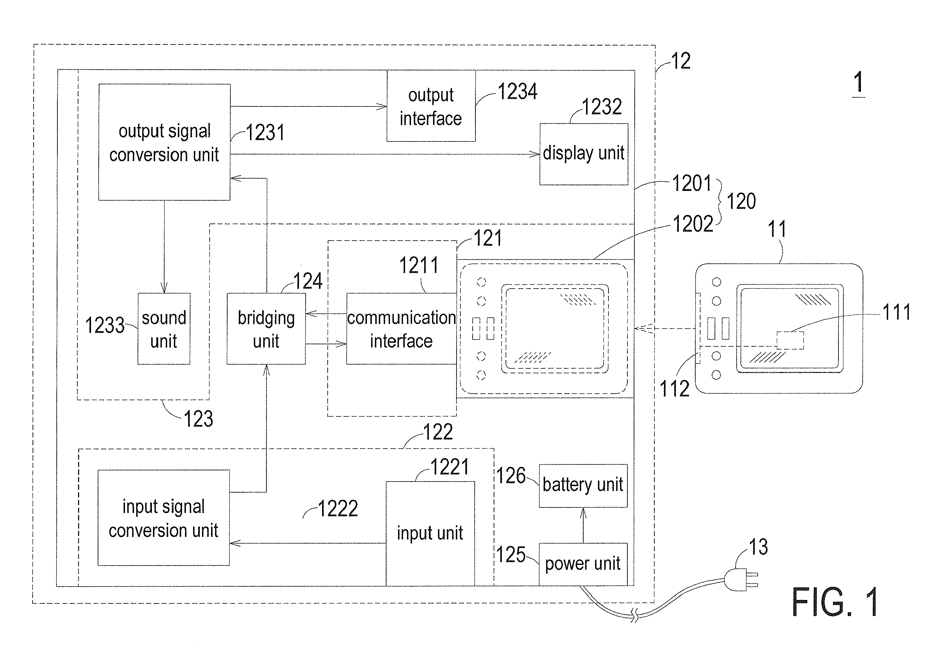

FIG. 1 is a schematic block diagram illustrating the architecture of a portable data processing system according to a first embodiment of the present invention. As shown in FIG. 1, the portable data processing system 1 comprises a handheld communication device 11 and a signal input/output device 12. An example of the handheld communication device 11 includes but is not limited to a smart phone. The signal input/output device 12 comprises a casing 120, a communication module 121, an input module 122, an output module 123 and a bridging unit 124. The casing 120 has a specified outward profile 1201. For example, the outward profile 1201 is similar to the outward profile of a notebook computer, a tablet personal computer, or the like. The casing 120 has a receiving space 1202 for partially or completely accommodating and storing the handheld communication device 11. The capacity of the receiving space 1202 is slightly greater than the volume of the handheld communication device 11. The receiving space 1202 is able to protect and fix the handheld communication device 11, and prevent the sliding action of the handheld communication device 11 relative to the signal input/output device 12.

The communication module 121 is disposed in an inner wall of the receiving space 1202 of the casing 120. The communication module 121 is selectively connected with the handheld communication device 11. The bridging unit 124 is connected with the communication module 121, the input module 122 and the output module 123. Through the bridging unit 124, the communication module 121, the input module 122 and the output module 123 are in communication with each other to exchange data. When the handheld communication device 11 is accommodated within the receiving space 1202 of the casing 120 and connected with the communication module 121, the handheld communication device 11 is operated according to a control command generated and outputted by the input module 122, and a data signal generated by the handheld communication device 11 is outputted from the output module 123 in real time.

Please refer to FIG. 1 again. The handheld communication device 11 is a smart phone, which comprises a processor 111 and a communication module 112. The processor 111 is capable of processing and computing data at a high speed. That is, the processor 111 is configured to provide various functions such as a document reading and editing function, a video playback function, a file access function, a satellite navigation function, and the like. The communication module 112 is connected with the processor 111. In addition, when the handheld communication device 11 is accommodated within the receiving space 1202 of the casing 120, the communication module 112 of the handheld communication device 11 and the communication module 121 of the signal input/output device 12 are in communication with each other. In such way, bidirectional data transmission or unidirectional data transmission between the handheld communication device 11 and the signal input/output device 12 is achievable. The configurations and functions of the smart phones are known to those skilled in the art, and are not redundantly described herein. In some embodiments, the signal input/output device 12 comprises a communication interface 1211, which is connected with the bridging unit 124. Through the communication interface 1211, the handheld communication device 11 accommodated within the receiving space 1202 and the signal input/output device 12 can be in communication with each other to render bidirectional data transmission or unidirectional data transmission.

In this embodiment, the input module 122 at least comprises an input unit 1221 and an input signal conversion unit 1222. In response to an input action of the user, the input unit 1221 generates and outputs a control command. The input signal conversion unit 1222 is connected with the input unit 1221 and the bridging unit 124 for receiving the control command from the input unit 1221, and converting the control command into an execution signal to be outputted. Through the bridging unit 124 and the communication module 121, the execution signal is transmitted from the input signal conversion unit 1222 to the handheld communication device 11, which is accommodated within the receiving space 1202. In response to the execution signal, the handheld communication device 11 performs a corresponding operation. At the same time, a data signal generated by the handheld communication device 11 is transmitted to the output module 123 through the bridging unit 124 to be outputted. The data signal is for example a multimedia signal, a text signal, an image signal and a network signal. In this embodiment, the input unit 1221 of the input module 122 is disposed on one surface of the casing 120 and the input signal conversion unit 1222 is disposed in the interior of the casing 120.

In this embodiment, the output module 123 comprises an output signal conversion unit 1231, a display unit 1232, a sound unit 1233 and an output interface 1234. The output signal conversion unit 1231 is connected with the bridging unit 124, the display unit 1232, the sound unit 1233 and the output interface 1234. Through the communication module 121 and the bridging unit 124, the data signal generated by the handheld communication device 11 is transmitted to the output signal conversion unit 1231. By the output signal conversion unit 1231, the data signal is converted into an image signal to be outputted from the display unit 1232 and/or a sound signal to be outputted from the sound unit 1233. In such way, the image signal generated by the handheld communication device 11 can be displayed on the display unit 1232 in real time and/or the sound signal generated by the handheld communication device 11 can be played through the sound unit 1233 in real time. Alternatively, the image signal and/or the sound signal may be transmitted to an external electronic device (not shown) through the output interface 1234. In this embodiment, the output signal conversion unit 1231 is disposed in the interior of the casing 120, and the display unit 1232, the sound unit 1233 and the output interface 1234 is disposed on one or more surfaces of the casing 120.

In this embodiment, the signal input/output device 12 further comprises a power unit 125 and a battery unit 126. The power unit 125 is connected with a utility power source 13, the communication module 121, the input module 122, the output module 123, the bridging unit 124 and the battery unit 126. The power unit 125 is used for receiving an input voltage from the utility power source 13, and converting the input voltage into plural output voltages. The output voltages are transmitted to respective modules and units of the signal input/output device 12 for powering respective modules and units. The battery unit 126 is used for storing the electric energy from the power unit 125. In addition, the battery unit 126 is connected with the communication module 121, the input module 122, the output module 123 and the bridging unit 124. In a case that the input voltage from the utility power source 13 is interrupted or the power unit 125 is disconnected from the utility power source 13, the units and modules of the signal input/output device 12 are all powered by the battery unit 126. That is, if the input voltage from the utility power source 13 is interrupted or the power unit 125 is disconnected from the utility power source 13, the electric energy stored in the battery unit 126 is transmitted to the communication module 121, the input module 122, the output module 123 and the bridging unit 124 to power these units and modules.

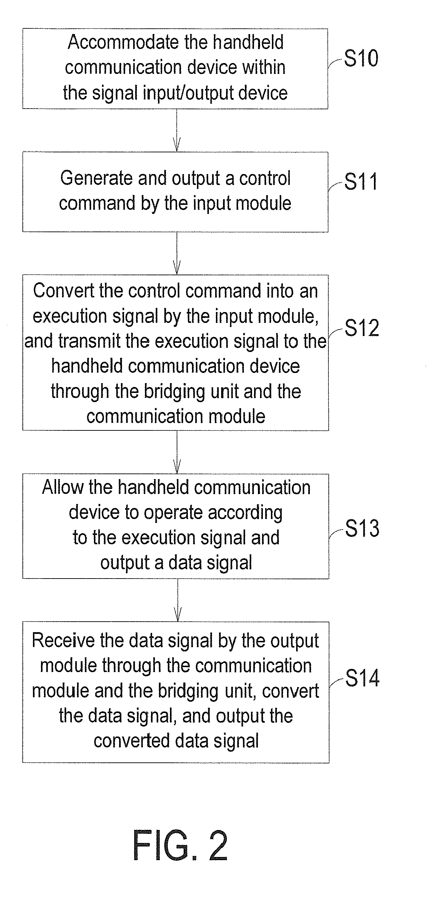

FIG. 2 is a flowchart illustrates a method of using the portable data processing system according to the first embodiment of the present invention. Hereinafter, the operations of the portable data processing system 1 will be illustrated with reference to FIGS. 1 and 2. Firstly, in the step S10, the handheld communication device 11 is accommodated within the receiving space 1202 of the signal input/output device 12. After the handheld communication device 11 and the signal input/output device 12 are in communication with each other, the handheld communication device 11 and the signal input/output device 12 are collectively defined as the portable data processing system 1.

In the step S11, a control command is generated and outputted by at least one input unit 1221 of the input module 122. In the step S12, by the input signal conversion unit 1222 of the input module 122, the control command is converted into an execution signal that is readable by the handheld communication device 11. Through the bridging unit 124 and the communication module 121, the execution signal is transmitted to the handheld communication device 11.

In the step S13, the handheld communication device 11 accommodated within the receiving space 1211 is operated according to the execution signal, and a data signal is outputted from the handheld communication device 11.

Finally, in the step S14, the data signal is received by the output module 123 through the communication module 121 and the bridging unit 124, and the data signal is converted and outputted by the output module 123. For example, the data signal is converted into an image signal and/or a sound signal, and then the image signal from the handheld communication device 11 is synchronously displayed on the display unit 1232 of the output module 123 and/or the sound signal is synchronously played by the sound unit 1233 of the output module 123.

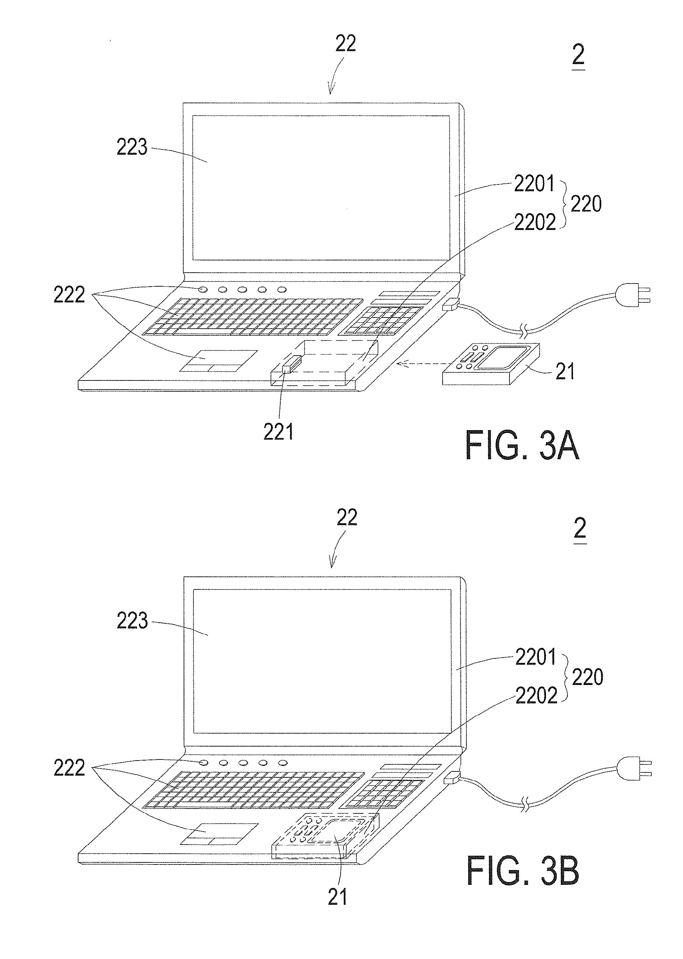

FIG. 3A is schematic perspective view illustrating a first application example of the portable data processing system of FIG. 1. Please refer to FIGS. 1, 2 and 3A. The elements corresponding to those in FIG. 1 will be designated by similar numeral references. The portable data processing system 2 comprises a handheld communication device 21 and a signal input/output device 22. An example of the handheld communication device 21 includes but is not limited to a smart phone. The signal input/output device 22 comprises a casing 220, a communication module 221, an input module 222, an output module 223 and a bridging unit (not shown). The casing 220 has a specified outward profile 2201, which is similar to the outward profile of a notebook computer. The casing 220 has a receiving space 2202 for partially or completely accommodating and storing the handheld communication device 21 (see FIG. 2B). The functions and operating principles of the components included in the handheld communication device 21 and the signal input/output device 22 of the portable data processing system 2 are similar to those of FIG. 1, and are not redundantly described herein.

An example of the communication interface of the communication module 221 includes but is not limited to a USB communication interface. An example of the input unit of the input module 222 includes but is not limited to a keyboard, a touchpad, a mouse or a power button. The display unit of the output module includes but is not limited to a display screen or a monitor. In response to an input action of the user, the input module 222 generates and outputs a control command. The control command includes a command of editing the file of the handheld communication device 21 by using a keyboard, a command of executing a specified program of the handheld communication device 21 by using a mouse, or a command of powering on or powering off the handheld communication device 21 by using a power button. In addition, by the input signal conversion unit (not shown) of the input module 222, the control command is converted into an execution signal. The execution signal is transmitted from the input signal conversion unit to the handheld communication device 21 through the bridging unit and the communication module 221. In response to the execution signal, the handheld communication device 21 performs a corresponding operation. In some embodiment, the input module 222 and the output module 223 can be combined to form a single input and output integration module, such as touch screen.

Through the communication module 221 and the bridging unit, the data signal generated by the handheld communication device 21 is transmitted to the output signal conversion unit (not shown) of the output module 223. By the output signal conversion unit, the data signal is converted into an image signal and/or a sound signal, which are respectively outputted from the display unit and the sound unit of the output module 223.

In accordance with the present invention, the signal input/output device 22 is not equipped with a high computing speed CPU, and thus the signal input/output device 22 fails to perform data processing and computing operations. Instead, the data processing and computing operations are performed by the handheld communication device 21. Since the major functions of the portable data processing system 2 are implemented by the single processor of the handheld communication device 21, the cost associated the hardware components and the software components will be largely reduced.

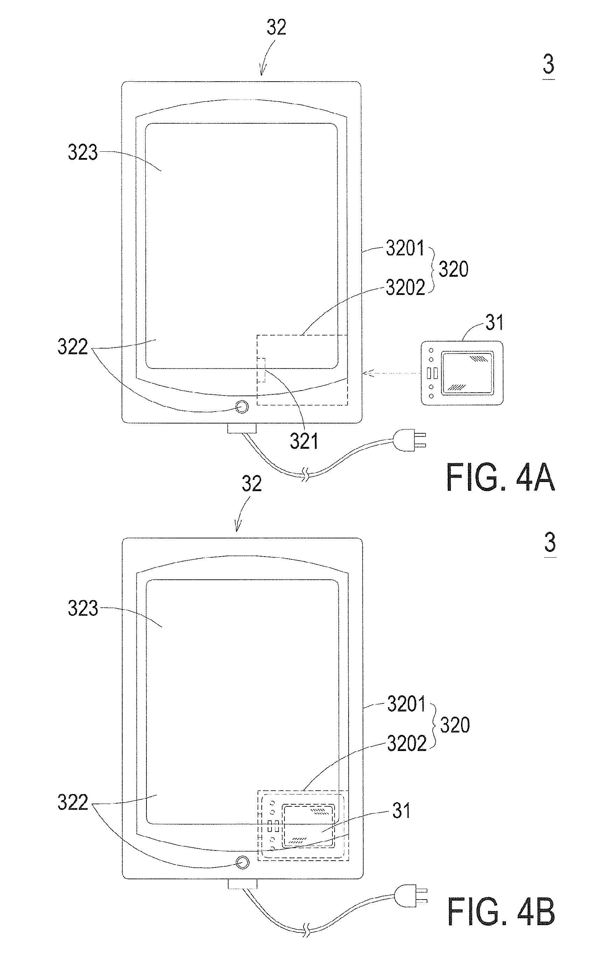

FIG. 4A is schematic perspective view illustrating a second application example of the portable data processing system of FIG. 1. Please refer to FIGS. 1, 2 and 4A. The elements corresponding to those in FIG. 1 will be designated by similar numeral references. The portable data processing system 3 comprises a handheld communication device 31 and a signal input/output device 32. An example of the handheld communication device 31 includes but is not limited to a smart phone. The signal input/output device 32 comprises a casing 320, a communication module 321, an input module 322, an output module 323 and a bridging unit (not shown). The casing 320 has a specified outward profile 3201, which is similar to the outward profile of a tablet personal computer. The casing 320 has a receiving space 3202 for partially or completely accommodating and storing the handheld communication device 31 (see FIG. 4B). The functions and operating principles of the components included in the handheld communication device 31 and the signal input/output device 32 of the portable data processing system 3 are similar to those of FIG. 1, and are not redundantly described herein.

In this embodiment, some of the input units of the input module 322 and the display unit of the output module are integrated into a display unit with an input function, for example a touch screen or a touch panel. The other input unit is for example a power button. In response to an input action of the user, the touch screen or the touch panel generates and outputs a control command. The control command includes a command of editing the file of the handheld communication device 21 by using the touch screen or the touch panel, a command of executing a specified program of the handheld communication device 21, or a command of powering on or powering off the handheld communication device 21 by using a power button. In addition, by the input signal conversion unit (not shown) of the input module 322, the control command is converted into an execution signal. The execution signal is transmitted from the input signal conversion unit to the handheld communication device 31 through the bridging unit and the communication module 321. In response to the execution signal, the handheld communication device 31 performs a corresponding operation. Through the communication module 321 and the bridging unit, the data signal generated by the handheld communication device 31 is transmitted to the output signal conversion unit (not shown) of the output module 323. By the output signal conversion unit, the data signal is converted into an image signal and/or a sound signal, which are respectively outputted from the display unit and the sound unit of the output module 323.

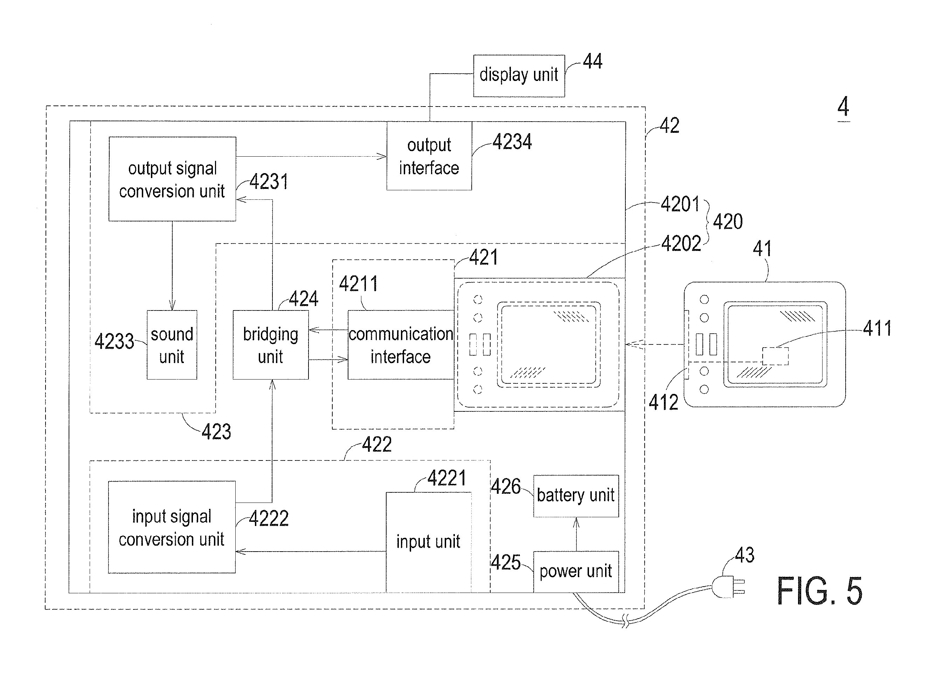

FIG. 5 is a schematic block diagram illustrating the architecture of a portable data processing system according to a second embodiment of the present invention. The elements corresponding to those in FIG. 1 will be designated by similar numeral references. As shown in FIG. 4, the portable data processing system 4 comprises a handheld communication device 41 and a signal input/output device 42. An example of the handheld communication device 41 includes but is not limited to a smart phone. The signal input/output device 42 comprises a casing 420, a communication module 421, an input module 422, an output module 423 and a bridging unit 424. The casing 420 has a specified outward profile 4201. For example, the outward profile 4201 is similar to the outward profile of a set-top box, a docking station, a projector (i.e. presentation device), or the like. The casing 420 has a receiving space 1202 for partially or completely accommodating and storing the handheld communication device 41. Moreover, the output module 423 of the signal input/output device 42 has no built-in display unit within the casing 420. On the other hand, an external display unit 44 is connected with the output interface 4234 of the output module 423, so that the data signal associated with the handheld communication device 41 can be outputted through the external display unit 44. The functions and operating principles of the other components included in the handheld communication device 41 and the signal input/output device 42 of the portable data processing system 4 are similar to those of FIG. 1, and are not redundantly described herein.

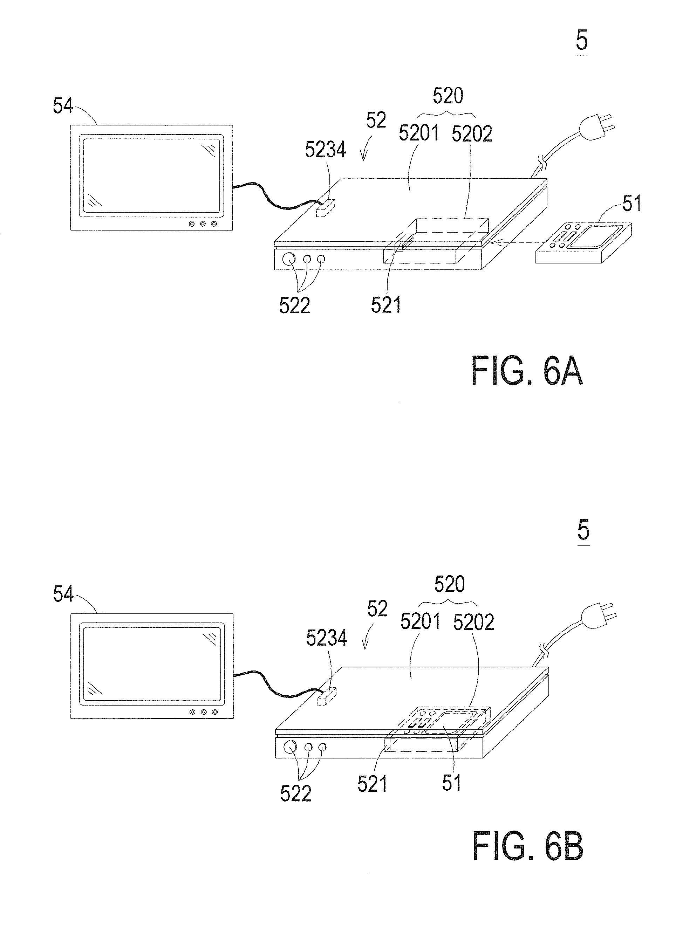

FIG. 6A is schematic perspective view illustrating a first application example of the portable data processing system of FIG. 5. Please refer to FIGS. 5 and 6A. The elements corresponding to those in FIG. 5 will be designated by similar numeral references. The portable data processing system 5 comprises a handheld communication device 51 and a signal input/output device 52. An example of the handheld communication device 51 includes but is not limited to a smart phone. The signal input/output device 52 comprises a casing 520, a communication module 521, an input module 522, an output module and a bridging unit (not shown). The casing 520 has a specified outward profile 5201, which is similar to the outward profile of a set-top box. The casing 520 has a receiving space 5202 for completely accommodating and storing the handheld communication device 51 (see FIG. 6B). The functions and operating principles of the components included in the handheld communication device 51 and the signal input/output device 52 of the portable data processing system 5 are similar to those of FIG. 5, and are not redundantly described herein.

In this embodiment, the input unit of the input module 522 is a function button or a power button. The output interface 5234 of the output module is a connecting interface to be connected with a display screen or a monitor. For example, the output interface 5234 is a VGA (Video Graphics Array) terminal, a DVI (Digital Visual Interface) terminal or a HDMI (High Definition Multimedia Interface) terminal. In response to an input action of the user, the input module 522 generates and outputs a control command. The control command includes a command of controlling the file of the handheld communication device 51 by using a function button, or a command of powering on or powering off the handheld communication device 51 by using a power button. In addition, by the input signal conversion unit (not shown) of the input module 522, the control command is converted into an execution signal. The execution signal is transmitted from the input signal conversion unit to the handheld communication device 51 through the bridging unit and the communication module 521. In response to the execution signal, the handheld communication device 51 performs a corresponding operation.

Through the communication module and the bridging unit, the data signal generated by the handheld communication device 51 is transmitted to the output signal conversion unit (not shown) of the output module. By the output signal conversion unit, the data signal is converted into an image signal and/or a sound signal. Through the output interface 5234, the image signal is transmitted to external display unit 54 to be outputted. The sound signal is outputted from the sound unit (not shown) of the output module. It is noted that numerous modifications may be made while retaining the teachings of the invention. For example, in some embodiments, the input module 522 of the signal input/output device 52 may be remotely controlled via a remote controller (not shown).

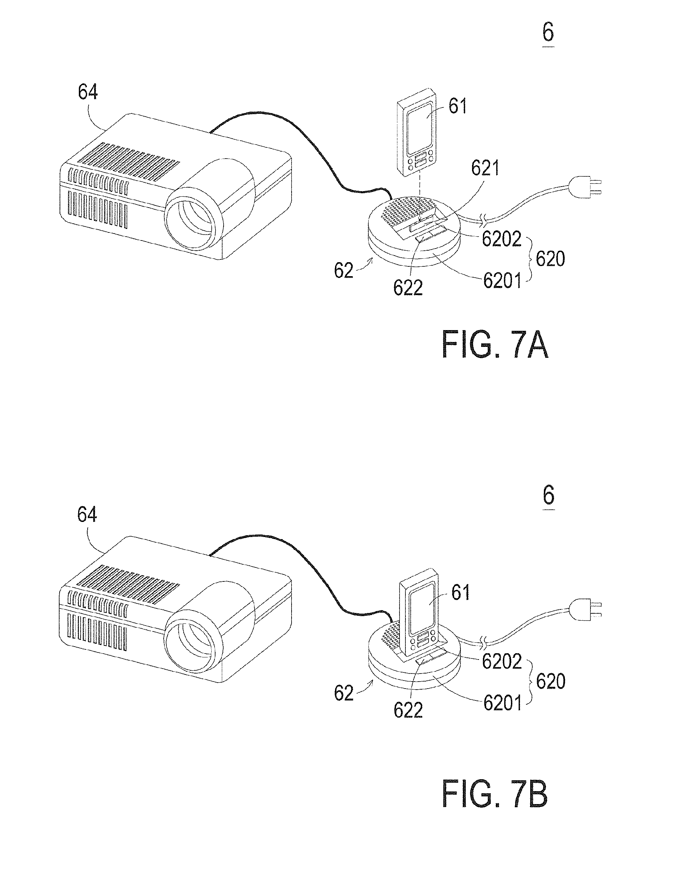

FIG. 7A is schematic perspective view illustrating a second application example of the portable data processing system of FIG. 5. Please refer to FIGS. 5 and 7A. The elements corresponding to those in FIG. 5 will be designated by similar numeral references. The portable data processing system 6 comprises a handheld communication device 61 and a signal input/output device 62. An example of the handheld communication device 61 includes but is not limited to a smart phone. The signal input/output device 62 comprises a casing 620, a communication module 621, an input module 622, an output module and a bridging unit (not shown). The casing 620 has a specified outward profile 6201, which is similar to the outward profile of a docking station. The casing 620 has a receiving space 6202 for at least partially accommodating and storing the handheld communication device 61 (see FIG. 7B). The functions and operating principles of the components included in the handheld communication device 61 and the signal input/output device 62 of the portable data processing system 6 are similar to those of FIG. 5, and are not redundantly described herein.

In this embodiment, the input unit of the input module 622 is a function button or a power button. The output interface of the output module is a connecting interface to be connected with a projector 64. For example, the output interface 5234 is a VGA (Video Graphics Array) terminal, a DVI (Digital Visual Interface) terminal or a HDMI (High Definition Multimedia Interface) terminal. In response to an input action of the user, the input module 622 generates and outputs a control command. The control command includes a command of controlling the file of the handheld communication device 61 by using a function button, or a command of powering on or powering off the handheld communication device 61 by using a power button. In addition, by the input signal conversion unit (not shown) of the input module 622, the control command is converted into an execution signal. The execution signal is transmitted from the input signal conversion unit to the handheld communication device 61 through the bridging unit and the communication module 621. In response to the execution signal, the handheld communication device 61 performs a corresponding operation.

Through the communication module and the bridging unit, the data signal generated by the handheld communication device 61 is transmitted to the output signal conversion unit (not shown) of the output module. By the output signal conversion unit, the data signal is converted into an image signal and/or a sound signal. Through the output interface, the image signal is transmitted to external display unit 64 (e.g. a projector) to be outputted. The sound signal is outputted from the sound unit (not shown) of the output module. It is noted that numerous modifications may be made while retaining the teachings of the invention. For example, in some embodiments, the input module 622 of the signal input/output device 62 may be remotely controlled via a remote controller (not shown).

From the above description, the present invention provides a portable data processing system by using a handheld communication device to perform data processing and computing operations, so that the portable data processing system has many benefits such as user-friendliness, easy portability, cost-effectiveness and practicability. In addition, the image signal of the handheld communication device can be synchronously outputted from a larger screen, and the control command of handheld communication device can be inputted in a user-friendly manner.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A portable data processing system, comprising:
a handheld communication device; and
a signal input/output device comprising:
a casing having a specified outward profile, wherein said casing has a receiving space for partially or completely accommodating said handheld communication device;
a communication module disposed within said receiving space, and selectively connected with said handheld communication device;
an input module for generating and outputting a control command, wherein when said handheld communication device is accommodated within said receiving space and connected with said communication module, said handheld communication device is operated according to said control command;
an output module for outputting a data signal generated by said handheld communication device in real time; and
a bridging unit connected with said communication module, said input module and said output module for communicating said communication module, said input module and said output module with each other, thereby transmitting said control command and said data signal.

2. The portable data processing system according to claim 1, wherein said handheld communication device is a smart phone.

3. The portable data processing system according to claim 1 or 2, wherein said specified outward profile of said casing is an outward profile of a notebook computer, a tablet personal computer, a set-top box, a projector or a docking station.

4. The portable data processing system according to any of the preceding claims, wherein said handheld communication device further comprises a processor for implementing data processing and computing functions of said portable data processing system.

5. The portable data processing system according to any of the preceding claims, wherein said input module comprising:
at least one input unit for generating and outputting said control command in response to an input action of a user; and
an input signal conversion unit electrically connected with said input unit and said bridging unit for converting said control command into an execution signal, and transmitting said execution signal to said handheld communication device within said receiving space, so that said handheld communication device is operated according to said execution signal.

6. The portable data processing system according to any of the preceding claims, wherein said output module comprising:
an output signal conversion unit for receiving said data signal from said handheld communication device through said communication module and said bridging unit, and converting said data signal into an image signal and/or a sound signal;
a display unit connected with said output signal conversion unit for outputting said image signal; and
a sound unit connected with said output signal conversion unit for outputting said sound signal.

7. The portable data processing system according to any of the preceding claims, wherein said input module and said output module are combined to form a single input and output integration module.

8. The portable data processing system according to claim 7 wherein said input and output integration module is a touch screen.

9. The portable data processing system according to any of the preceding claims, wherein said output module comprises:
an output interface to be connected with an external display unit; and
an output signal conversion unit connected with said bridging unit and said output interface for receiving said data signal from said handheld communication device through said communication module and said bridging unit, and converting said data signal into an image signal, wherein said image signal is transmitted to said external display unit through said output interface to be outputted from said external display unit.

10. The portable data processing system according to any of the preceding claims, wherein said data signal comprises multimedia signal, text signal, image signal or network signal.

11. A portable data processing system, comprising:
a handheld communication device; and
a signal input/output device comprising:
a communication module selectively connected with said handheld communication device;
an input module for generating and outputting a control command, wherein when said handheld communication device is connected with said communication module, said handheld communication device is operated according to said control command;
an output module for outputting a data signal generated by said handheld communication device in real time; and
a bridging unit connected with said communication module, said input module and said output module for communicating said communication module, said input module and said output module with each other, thereby transmitting said control command and said data signal.

12. A signal input/output device communicable with a handheld communication device to collectively define a portable data processing system, said signal input/output device comprising:
a casing having a specified outward profile, wherein said casing has a receiving space for partially or completely accommodating said handheld communication device;
a communication module disposed within said receiving space, and selectively connected with said handheld communication device;
an input module for generating and outputting a control command, wherein when said handheld communication device is accommodated within said receiving space and connected with said communication module, said handheld communication device is operated according to said control command;
an output module for outputting a data signal generated by said handheld communication device in real time; and
a bridging unit connected with said communication module, said input module and said output module for communicating said communication module, said input module and said output module with each other, thereby transmitting said control command and said data signal.
